# EUROPÄISCHE PATENTSCHRIFT

(11) **EP 1 844 377 B1**
(45) Veröffentlichungstag und Bekanntmachung des Hinweises auf die Patenterteilung: **21.10.2015**
(21) Anmeldenummer: 06706672.0
(22) Anmeldetag: 06.02.2006
(51) Int. Cl.: G05D 7/01

(54) **MENGENREGLER**
FLOW REGULATOR
REGULATEUR DE DEBIT

(30) Priorität: 05.02.2005 DE 102005005433
(43) Veröffentlichungstag der Anmeldung: 17.10.2007
(73) Patentinhaber: Neoperl GmbH, 79379 Müllheim (DE)
(72) Erfinder: RUHNKE, Christof, 12527 Berlin (DE)
(74) Vertreter: Maucher Börjes Jenkins Patent- und Rechtsanwälte
(86) Internationale Anmeldenummer: PCT/EP2006/001017
(87) Internationale Veröffentlichungsnummer: WO 2006/082092

(56) Entgegenhaltungen:
- EP-A- 0 969 233
- EP-A- 1 315 059
- WO-A-03/045352
- US-A1- 2001 015 224
- US-A1- 2002 189 679

## Beschreibung

Die Erfindung betrifft einen Mengenregler, insbesondere zum Einsetzen in einem Strahlregler in einer Auslaufarmatur, mit einem Einsatzkörper, der in axialer Richtung von mindestens einem Strömungskanal durchsetzt ist, und einem Drosselelement, das zusammen mit dem Einsatzkörper einen Steuerspalt zum Durchtritt eines Fluids in den mindestens einen Strömungskanal bildet.

Ein derartiger Mengenregler oder Durchflusskonstanthalter ist beispielsweise in der DE 102 20 287 A1 oder EP 1 315 059 A2 offenbart. Der bekannte Mengenregler weist ein Reglergehäuse mit einem zentrisch angeordneten Fixierturm und einem diesen umgebenden Durchtrittskanal auf. In dem Durchtrittskanal befindet sich ein Drosselkörper aus einem elastischen Material, wobei der Drosselkörper auf den Fixierturm aufgeschoben ist und diesen umgreift. Ein den Mengenregler durchfließendes Fluid verformt aufgrund einer sich beim Durchströmen bildenden Druckdifferenz den Drosselkörper, wodurch der freie Querschnitt des Durchtrittskanals verringert wird. Mit zunehmender Strömungsgeschwindigkeit kommt es zu einem weiteren Dehnen des elastischen Drosselkörpers und einer damit einhergehenden weiteren Reduzierung des freien Querschnitts des Durchtrittskanals. Hierdurch wird der Volumenstrom des Fluids begrenzt.

Der wesentliche Nachteil des bekannten Mengenreglers besteht in einer nicht zufrieden stellenden Langzeitstabilität, die durch Kalkablagerungen zusätzlich verringert wird, und einer störenden Geräuschentwicklung während der Fluidentnahme.

Demzufolge liegt der Erfindung die Aufgabe zugrunde, einen Mengenregler bereitzustellen, der eine deutlich erhöhte Haltbarkeit im Praxisbetrieb bei einem maximalen Bedienkomfort während der Fluidentnahme ermöglicht.

Die Aufgabe wird erfindungsgemäß mit einem Mengenregler gelöst, bei dem das Drosselelement als formstabile Drosselkappe ausgebildet ist, die über ein elastisches Federelement gegenüber dem Einsatzkörper abgestützt ist.

Unter formstabil wird eine Materialbeschaffenheit verstanden, die unter den betriebsbedingt zu erwartenden Fluiddrücken keine Verformung der Drosselkappe erkennen lässt. Bei einer zunehmenden Durchflussgeschwindigkeit des Fluids wird die Drosselkappe über das elastische Federelement näher, an den Einsatzkörper gebracht, wodurch eine Verringerung des wirksamen Querschnitts erzielt wird. Dieser variable Querschnitt stellt den Steuerspalt dar.

Ein wesentlicher Vorteil der Erfindung liegt in der definierten Beanspruchung des Federelementes in einer Wirkrichtung. In einer vorteilhaften Ausführungsform ist das Federelement in Strömungsrichtung des Fluids über die Drosselkappe beispielsweise ausschließlich mit einer Druckkraft beansprucht. Eine Dehnung findet dann weder bei dem Federelement noch der im Fluidstrom liegenden Drosselkappe statt.

Vorzugsweise ist das elastische Federelement außerhalb des mindestens einen Strömungskanals angeordnet. Bei dieser Ausführungsform befindet sich das mechanisch beanspruchte Federelement außerhalb des Fluidstromes und ist dadurch insbesondere bei heißen Fluiden einer deutlich geringeren thermischen Belastung ausgesetzt. Die Anordnung außerhalb des Fluidstromes schützt das Federelement auch gegen Verkalkung und erhöht damit erheblich die Lebenszeit des Mengenreglers.

In dem Einsatzkörper kann zentrisch eine Verteilerkuppel ausgeformt sein, um welche ringförmig mehrere Strömungskanäle angeordnet sind. Dabei kann der Steuerspalt durch die Verteilerkuppel und die Drosselkappe gebildet sein. Die Verteilerkuppel kann eine Form entsprechend eines Kegels, Kegelstumpfes, einer Kugel, Halbkugel, eines Kugelabschnittes beziehungsweise eines Rotationsparaboloids oder Ellipsoids aufweisen. Der Vorteil der Kugelform oder Form mit einer gerundeten Oberfläche gegenüber der Kegelform besteht in einer größeren vom Fluid benetzten Oberfläche der Verteilerkuppel, wodurch eine größere Kraft auf das Federelement über die Drosselkappe erzielt wird.

Als besonders günstig hat es sich erwiesen, zentrisch in der Drosselkappe eine Eintrittsöffnung für das Fluid vorzusehen. Hierdurch wird das in den Mengenregler eintretende Fluid gleichmäßig verteilt und die Drosselkappe in radialer Richtung gleichmäßig ohne zu verkanten in Richtung des Einsatzkörpers oder der Verteilerkuppel bewegt.

Vorteilhafterweise ist die Drosselkappe in Strömungsrichtung vor dem Einsatzkörper angeordnet. In axialer Richtung befindet sich dann der überwiegende Teil der Drosselkappe sowie die Eintrittsöffnung außerhalb des Einsatzkörpers. Durch diese konstruktive Ausgestaltung kann der Einsatzkörper in axialer Richtung besonders kurz gebaut werden.

In einer bevorzugten Ausgestaltung sind die Drosselkappe und die Verteilerkuppel in Strömungsrichtung des Fluids konvex ausgeformt. Dabei sollte die Wölbung von Drosselkappe und Verteilerkuppel gleichartig sein, so dass ein in axialer Richtung gleichmäßig breiter Steuerspalt ausgebildet ist.

Im Hinblick auf möglichst geringe Fertigungskosten kann das Federelement beispielsweise als O-Ring ausgebildet sein.

Der O-Ring kann in eine ebenfalls ringförmige Haltenut eingelegt sein. Im entspannten Zustand des O-Rings oder allgemein des Federelementes liegt dieser/dieses lose in der Haltenut. Folglich können die Fertigungstoleranzen vergleichsweise groß sein, wodurch die Fertigungskosten weiter gesenkt werden. In jedem Fall sollte die Haltenut in radialer Richtung eine Druckverformung des O-Ringes oder Federelementes ermöglichen.

Günstigerweise ist die Haltenut konzentrisch um die Verteilerkuppel und/oder die mehreren Strömungskanäle angeordnet. Dieses führt zu einer gleichmäßigen Krafteinleitung, senkt Vibrationen während des Fluiddurchflusses und trägt dadurch zu einer weiteren Geräuschminderung sowie einer Erhöhung der Lebenszeit des Mengenreglers bei.

Vorzugsweise weist der mindestens eine Strömungskanal auf einer Austrittseite des Einsatzkörpers eine konisch aufgeweitete Austrittsöffnung auf.

Der erfindungsgemäße Mengenregler kann auch Verwendung in Getränkeautomaten finden. Bei diesen Getränkeautomaten reicht dann eine Zeitsteuerung aus, um eine defnierte Menge eines Getränkes mit einem konstanten Druck beziehungsweise einer konstanten Strömungsgeschwindigkeit in einen Becher fließen zu lassen.

Die Erfindung wird zum besseren Verständnis anhand der nachfolgenden fünf Zeichnungsfiguren näher erläutert. Dabei zeigt die
- **Fig. 1:**: einen schematischen Querschnitt durch einen Mengenregler;
- **Fig. 2:**: eine Draufsicht auf einen Einsatzkörper mit abgenommener Drosselkappe;
- **Fig. 3:**: eine Draufsicht auf eine Drosselkappe;
- **Fig. 4:**: einen schematischen Querschnitt eines Mengenreglers in einer 1/2" Verschraubung und
- **Fig. 5:**: einen schematischen Querschnitt eines Mengenreglers zur Montage in einem Luftsprudlergehäuse.

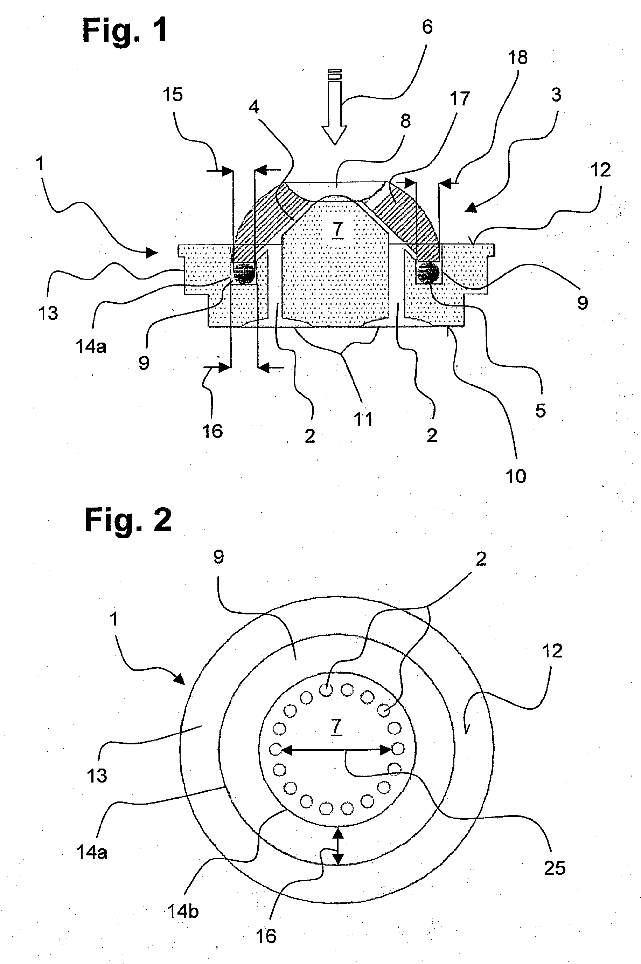

Die Figur 1 zeigt in einem Querschnitt einen Mengenregler mit einem Einsatzkörper 1 und eine als Drosselelement ausgebildete Drosselkappe 3. In einem eingebauten Zustand wird der Mengenregler in Strömungsrichtung 6 von einem nicht gezeigten Fluid durchströmt.

Der Einsatzkörper 1 weist einen umlaufenden Randabschnitt 13 auf, der auf einer der Strömungsrichtung 6 zugewandten Eintrittseite 12 mit einer ebenen Oberfläche abschließt. Auf der Strömungsrichtung 6 abgewandten Seite ist der Einsatzkörper 1 mit einer zur Eintrittseite 12 parallelen ebenen Austrittseite 10 ausgebildet.

In einem mittleren Bereich ist an dem Einsatzkörper 1 eine gegenüber dem Randabschnitt 13 vorstehende Verteilerkuppel 7 angeordnet, die entgegen der Strömungsrichtung 6 konisch zuläuft. In einem unterhalb der Eintrittseite 12 liegenden Abschnitt sind in der Verteilerkuppel 7 kranzartig eine Vielzahl von Strömungskanälen 2 angeordnet, von denen die Darstellung der Figur 1 lediglich zwei gegenüberliegende Strömungskanäle 2 erkennen lässt. Die Strömungskanäle 2 durchlaufen den Einsatzkörper 1 vollständig von der Eintrittseite 12 zu der Austrittseite 10 und weiten sich im Austrittsbereich jeweils mit einer trichterförmigen Austrittsöffnung 11 auf.

Das äußere radiale Ende der Verteilerkuppel 7 geht in eine umlaufende, die Verteilerkuppel 7 kreisförmig umgebende Haltenut 9 über, deren Außenwand 14a im wesentlichen rechtwinklig zu der Eintrittseite 12 ausgerichtet ist. Lose in der Haltenut 9 befindet sich ein O-Ring 5, dessen Querschnitt 15 geringer gewählt ist als die Breite 16 der Haltenut 9.

Auf dem O-Ring 5 stützt sich eine Drosselkappe 3 ab. Die Drosselkappe 3 umfasst eine kuppelartige Umfangswand 17, die an ihrem oberen Ende vollständig von einer Eintrittsöffnung 8 durchbrochen ist. Dabei befindet sich die Eintrittsöffnung 8 zentrisch über der Verteilerkuppel 7 des Einsatzkörpers 1. Die Dicke 18 im unteren Abschnitt der Umfangswand 17 ist geringer als die Breite 16 der Haltenut 9 gewählt, so dass eine Verschiebbarkeit der Drosselkappe 3 gegenüber dem Einsatzkörper 1 gewährleistet ist. Zwischen der Verteilerkuppel 7 und der Innenseite der Drosselkappe 3 ist ein Steuerspalt 4 ausgebildet.

Während des Betriebes tritt in Strömungsrichtung 6 das Fluid durch die Drosselkappe 3 hindurch und trifft auf die Verteilerkuppel 7, an der eine Ablenkung des Fluidstromes zunächst in den Steuerspalt 4 und von dort in Richtung der Strömungskanäle 2 stattfindet. Bei zunehmender Strömungsgeschwindigkeit innerhalb des Steuerspaltes 4 wird die Drosselkappe 3 angesogen und nähert sich dabei der Verteilerkuppel 7 an, so dass der Steuerspalt 4 schmaler wird und nur ein geringerer Volumenstrom durch den Mengenregler fließt. Durch eine Annäherung der Drosselkappe 3 an die Verteilerkuppel 7 wird über die Umfangswand 17 der Drosselkappe 3 eine Druckkraft auf den O-Ring 5 ausgeübt, die wiederum zu einer Verformung des O-Ringes 5 führt. Bei einer sich verlangsamenden Strömungsgeschwindigkeit in dem Steuerspalt 4 lässt die Sogkraft des Fluids nach und der O-Ring 5 nimmt aufgrund seiner materialimmanenten Rückverformungskraft seine ursprüngliche runde Querschnittsform ein. Dadurch erweitert sich der Steuerspalt 4 und eine größere Menge Fluid kann den Einsatzkörper 1 passieren. Demzufolge ist es möglich, einen vorgebbaren Fluidstrom unabhängig von dem in Strömungsrichtung vor dem Mengenregler herrschenden Druckniveau durch den Mengenregler fließen zum lassen.

Die Figur 2 zeigt den Einsatzkörper 1 ohne die Drosselkappe 3 in einer Draufsicht. An dem radial äußeren Ende sind konzentrisch um die Spitze der Verteilerkuppel 7 die insgesamt 18 parallel zueinander ausgerichteten Strömungskanäle 2 zu erkennen. Außerhalb der Strömungskanäle 2 ist die Verteilerkuppel 7 von der Haltenut 9 begrenzt, in welche das in Figur 2 nicht gezeigte Federelement 3 beispielsweise als O-Ring 5 eingelegt wird. Die Haltenut 9 weist eine parallel zu der Außenwand 14a ausgerichtete Innenwand 14b auf, wobei sowohl die Innenwand 14b als auch die Außenwand 14a senkrecht zu der Eintrittseite 12 im Bereich des Randabschnitts 13 steht.

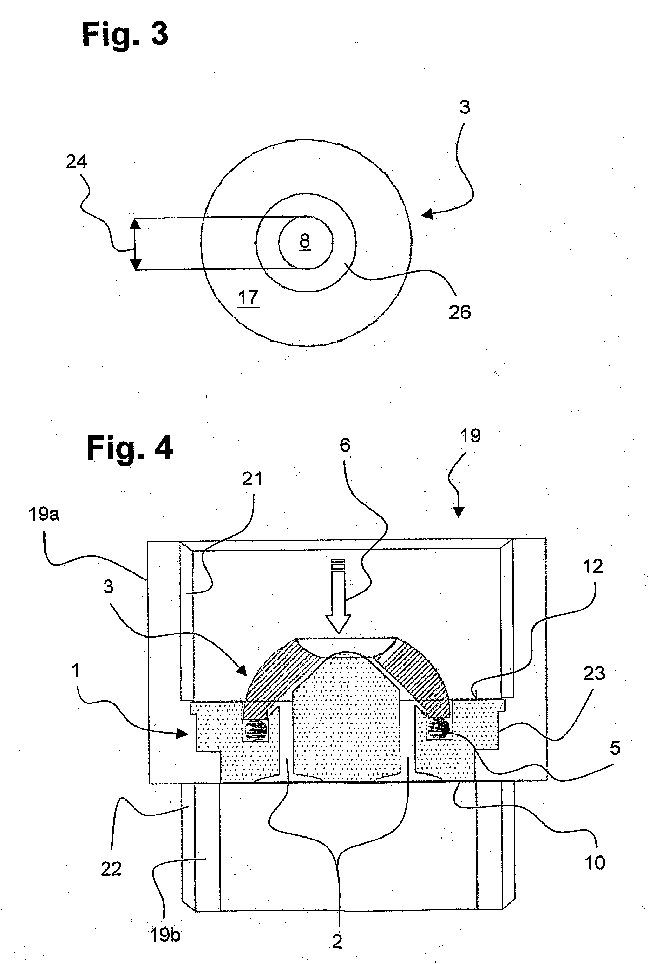

Die Figur 3 zeigt ebenfalls in einer Draufsicht die Drosselkappe 3 mit der nach außen gerundeten Umfangswand 17. Zentrisch innerhalb der Drosselkappe 3 befindet sich die Eintrittsöffnung 8, deren Durchmesser 24 kleiner gewählt ist als der Innendurchmesser 25 (siehe Figur 2) der Strömungskanäle 2. Andernfalls käme es nicht zu einer Ausformung eines Steuerspaltes 4, da das Fluid unmittelbar von der Eintrittsöffnung 8 in die Strömungskanäle 2 fließen würde. In einem Übergangsbereich 26 ist die Drosselkappe 3 mit einer planen Oberfläche versehen, die in einem zusammengesetzten Zustand von Drosselkappe 3 und Einsatzkörper 1 parallel zu der Eintrittseite 12 des Randabschnitts 13 verläuft.

Die Figur 4 stellt eine Verwendungsmöglichkeit des Mengenreglers in einer 1/2" Verschraubung 19 für Duschen dar. Die Verschraubung 19 umfasst einen ersten durchmessergroßen Abschnitt 19a und einen daran angreifenden durchmesserkleinen Abschnitt 19b. Der durchmessergroße Abschnitt 19a weist ein Innengewinde 21 zur Befestigung der Verschraubung 19 an einer nicht gezeigten Auslaufarmatur auf. Das Innengewinde 21 erstreckt sich in axialer Richtung bis zu ca. 2/3 der Gesamtlänge des durchmessergroßen Abschnitts 19a. In Strömungsrichtung 6 ist endseitig in unmittelbaren Anschluss an das Innengewinde 21 der Einsatzkörper 1 des Mengenreglers angeordnet. Hierzu sind sowohl der Einsatzkörper 1 als auch die Innenwand des durchmessergroßen Abschnitts 19a mit komplementär aufeinander abgestimmten Konturen 23 versehen, so dass der Einsatzkörper 1 in Strömungsrichtung 6 formschlüssig fixiert ist. Die Drosselkappe 3 ragt entgegen der Strömungsrichtung 6 in den durchmessergroßen Abschnitt 19a hinein.

Der durchmesserkleine Abschnitt 19b weist ein Außengewinde 22 auf, mit dem eine Schraubverbindung zum Beispiel mit einem Duschschlauch hergestellt werden kann.

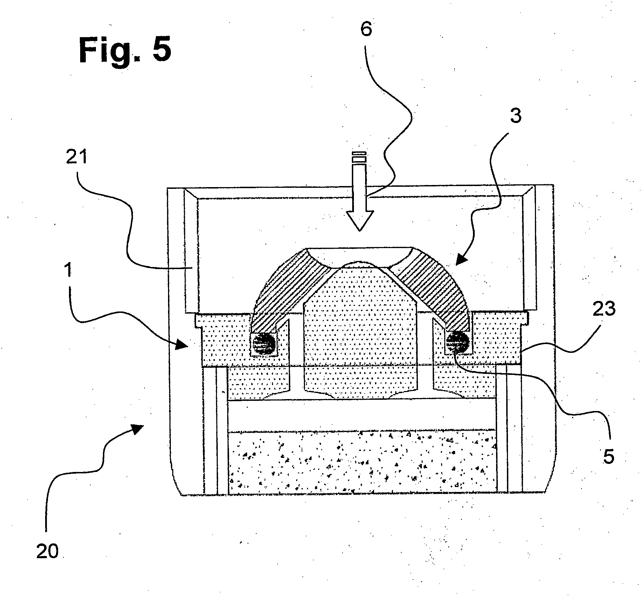

Die Figur 5 zeigt eine weitere Verwendungsmöglichkeit des Mengenreglers integriert in ein Luftsprudlergehäuse 20. Das Luftsprudlergehäuse 20 weist ein Innengewinde 21 auf, mit welchem eine Befestigung beispielsweise mit einem nicht dargestellten Wasserhahn realisiert werden kann. In Strömungsrichtung 6 hinter dem Innengewinde 21 befindet sich der Mengenregler, der ebenfalls über Konturen 23 des Einsatzkörpers 1 formschlüssig innerhalb des Luftsprudlergehäuses 20 angeordnet ist.

### Bezugszeichenliste

- 1: Einsatzkörper
- 2: Strömungskanal
- 3: Drosselelement, Drosselkappe
- 4: Steuerspalt
- 5: Federelement, O-Ring
- 6: Strömungsrichtung
- 7: Verteilerkuppel
- 8: Eintrittsöffnung
- 9: Haltenut
- 10: Austrittseite
- 11: Austrittsöffnung
- 12: Eintrittseite
- 13: Randabschnitt
- 14a: Außenwand Haltenut
- 14b: Innenwand Haltenut
- 15: Querschnitt O-Ring
- 16: Breite Haltenut
- 17: Umfangswand Drosselkappe
- 18: Dicke Umfangswand
- 19: 1/2" Verschraubung für Duschen
- 19a: Durchmessergroßer Abschnitt Verschraubung
- 19b: Durchmesserkleiner Abschnitt Verschraubung
- 20: Luftsprudlergehäuse
- 21: Innengewinde
- 22: Außengewinde
- 23: Kontur
- 24: Durchmesser Eintrittsöffnung
- 25: Innendurchmesser Strömungskanäle
- 26: Übergangsbereich

## Patentansprüche

1. Mengenregler, zum Einsetzen in einen Strahlregler einer Auslaufarmatur, mit einem Einsatzkörper (1), der in axialer Richtung von mindestens einem Strömungskanal (2) durchsetzt ist, und einem Drosselelement (3), das zusammen mit dem Einsatzkörper (1) einen Steuerspalt (4) mit einem variablen Querschnitt zum Durchtritt eines Fluids in den mindestens einen Strömungskanal (2) bildet, wobei das Drosselelement (3) als formstabile Drosselkappe (3) ausgebildet ist, die über ein elastisches Federelement (5) gegenüber dem Einsatzkörper (1) abgestützt ist,
**dadurch gekennzeichnet,**
**dass** der Einsatzkörper (1) eine Verteilerkuppel (7) aufweist, wobei die Verteilerkuppel (7) und die Drosselkappe (3) in Strömungsrichtung gleichartig gewölbt oder konisch geformt sind und der Steuerspalt (4) in axialer Richtung gleichmäßig breit ausgebildet ist.

2. Mengenregler nach Anspruch 1, **dadurch gekennzeichnet, dass** das Federelement (5) außerhalb des mindestens einen Strömungskanals (2) angeordnet ist.

3. Mengenregler nach Anspruch 1 oder 2, **dadurch gekennzeichnet, dass** das Federelement (5) in Strömungsrichtung (6) des Fluids über die Drosselkappe (3) mit einer Druckkraft beansprucht ist.

4. Mengenregler nach einem der Ansprüche 1 bis 3, **dadurch gekennzeichnet, dass** in dem Einsatzkörper (1) zentrisch eine Verteilerkuppel (7) angeordnet ist, um welche ringförmig mehrere Strömungskanäle (2) angeordnet sind.

5. Mengenregler nach Anspruch 4, **dadurch gekennzeichnet, dass** die Verteilerkuppel (7) und die Drosselkappe (3) den Steuerspalt (4) ausbilden.

6. Mengenregler nach einem der Ansprüche 1 bis 5, **dadurch gekennzeichnet, dass** die Drosselkappe (3) eine zentrisch angeordnete Eintrittsöffnung (8) aufweist.

7. Mengenregler nach einem der Ansprüche 1 bis 6, **dadurch gekennzeichnet, dass** die Drosselkappe (3) in Strömungsrichtung (6) des Fluids vor dem Einsatzkörper (1) angeordnet ist.

8. Mengenregler nach einem der Ansprüche 1 bis 7, **dadurch gekennzeichnet, dass** die Drosselkappe (3) in Strömungsrichtung (6) des Fluids konvex ausgeformt ist.

9. Mengenregler nach einem der Ansprüche 4 bis 8, **dadurch gekennzeichnet, dass** die Verteilerkuppel (7) in Strömungsrichtung (6) des Fluids konvex ausgeformt ist.

10. Mengenregler nach einem der Ansprüche 1 bis 9, **dadurch gekennzeichnet, dass** das Federelement (5) einen O-Ring umfasst.

11. Mengenregler nach Anspruch 10, **dadurch gekennzeichnet, dass** der O-Ring (5) in eine Haltenut (9) eingelegt ist.

12. Mengenregler nach Anspruch 11, **dadurch gekennzeichnet, dass** die Haltenut (9) konzentrisch um die Verteilerkuppel (7) und/oder die mehreren Strömungskanäle (2) angeordnet ist.

13. Mengenregler nach einem der Ansprüche 1 bis 12, **dadurch gekennzeichnet, dass** der mindestens eine Strömungskanäl (2) auf einer Austrittseite (10) des Einsatzkörpers (1) eine konisch aufgeweitete Austrittsöffnung (11) aufweist.

## Claims

1. Flow regulator, for insertion in a jet regulator in an outlet fitting, comprising an insertion body (1) through which at least one flow duct (2) passes in an axial direction, and a throttle element (3) which, together with the insertion body (1), forms a control gap (4) with a variable cross section for the passage of a fluid into the at least one flow duct (2), wherein the throttle element (3) is formed as a dimensionally stable throttle cap (3) which is supported in relation to the insertion body (1) via an elastic spring element (5), **characterised in that** the insertion body (1) has a distributor dome (7), wherein the distributor dome (7) and the throttle cap (3) are formed in a similarly curved or conical manner in the flow direction and the control gap (4) is formed with a uniform width in the axial direction.

2. Flow regulator as claimed in claim 1, **characterised in that** the spring element (5) is arranged outside of the at least one flow duct (2).

3. Flow regulator as claimed in claim 1 or 2, **characterised in that** the spring element (5) is stressed by a pressure force in the flow direction (6) of the fluid via the throttle cap (3).

4. Flow regulator as claimed in any one of claims 1 to 3, **characterised in that** a distributor dome (7) is arranged centrically in the insertion body (1), a plurality of flow ducts (2) being arranged circularly around said dome.

5. Flow regulator as claimed in claim 4, **characterised in that** the distributor dome (7) and the throttle cap (3) form the control gap (4).

6. Flow regulator as claimed in any one of claims 1 to 5, **characterised in that** the throttle cap (3) comprises a centrically arranged inlet aperture (8).

7. Flow regulator as claimed in any one of claims 1 to 6, **characterised in that** the throttle cap (3) is arranged upstream of the insertion body (1) in the flow direction (6) of the fluid.

8. Flow regulator as claimed in any one of claims 1 to 7, **characterised in that** the throttle cap (3) has a convex shape in the flow direction (6) of the fluid.

9. Flow regulator as claimed in any one of claims 4 to 8, **characterised in that** the distributor dome (7) has a convex shape in the flow direction (6) of the fluid.

10. Flow regulator as claimed in any one of claims 1 to 9, **characterised in that** the spring element (5) comprises an O-ring.

11. Flow regulator as claimed in claim 10, **characterised in that** the O-ring (5) is placed in a retaining groove (9).

12. Flow regulator as claimed in claim 11, **characterised in that** the retaining groove (9) is arranged concentrically around the distributor dome (7) and/or the plurality of flow ducts (2).

13. Flow regulator as claimed in any one of claims 1 to 12, **characterised in that** the at least one flow duct (2) comprises a conically expanded outlet aperture (11) on an outlet side (10) of the insertion body (1).

## Revendications

1. Régulateur de débit à insérer dans un brise-jet d'un bec de robinet, avec un corps d'insertion (1), qui est traversé en direction axiale par au moins un canal d'écoulement (2), et avec un élément d'étranglement (3), qui forme avec le corps d'insertion (1) une fente de commande (4) de section transversale variable pour le passage d'un fluide dans ledit au moins un canal d'écoulement (2), dans lequel l'élément d'étranglement (3) est constitué par un chapeau d'étranglement de forme stable (3), qui s'appuie par l'intermédiaire d'un élément de ressort élastique (5) contre le corps d'insertion (1), **caractérisé en ce que** le corps d'insertion (1) présente un dôme de répartition (7) dans lequel le dôme de répartition (7) et le chapeau d'étranglement (3) sont identiquement incurvés ou de forme conique identique dans la direction d'écoulement et la fente de commande (4) présente une largeur uniforme en direction axiale.

2. Régulateur de débit selon la revendication 1, **caractérisé en ce que** l'élément de ressort (5) est disposé à l'extérieur dudit au moins un canal d'écoulement (2).

3. Régulateur de débit selon la revendication 1 ou 2, **caractérisé en ce que** l'élément de ressort (5) est soumis à une force de compression dans la direction d'écoulement (6) du fluide par le chapeau d'étranglement (3).

4. Régulateur de débit selon l'une quelconque des revendications 1 à 3, **caractérisé en ce qu'**un dôme de répartition (7) est disposé au centre dans le corps d'insertion (1), autour duquel plusieurs canaux d'écoulement (2) sont disposés en anneau.

5. Régulateur de débit selon la revendication 4, **caractérisé en ce que** le dôme de répartition (7) et le chapeau d'étranglement (3) forment la fente de commande (4).

6. Régulateur de débit selon l'une quelconque des revendications 1 à 5, **caractérisé en ce que** le chapeau d'étranglement (3) présente une ouverture d'entrée (8) disposée au centre.

7. Régulateur de débit selon l'une quelconque des revendications 1 à 6, **caractérisé en ce que** le chapeau d'étranglement (3) est disposé avant le corps d'insertion (1) dans la direction d'écoulement (6) du fluide.

8. Régulateur de débit selon l'une quelconque des revendications 1 à 7, **caractérisé en ce que** le chapeau d'étranglement (3) est de forme convexe dans la direction d'écoulement (6) du fluide.

9. Régulateur de débit selon l'une quelconque des revendications 4 à 8, **caractérisé en ce que** le dôme de répartition (7) est de forme convexe dans la direction d'écoulement (6) du fluide.

10. Régulateur de débit selon l'une quelconque des revendications 1 à 9, **caractérisé en ce que** l'élément de ressort (5) comprend un joint torique.

11. Régulateur de débit selon la revendication 10, **caractérisé en ce que** le joint torique (5) est posé dans une rainure de retenue (9).

12. Régulateur de débit selon la revendication 11, **caractérisé en ce que** la rainure de retenue (9) est disposée de façon concentrique autour du dôme de répartition (7) et/ou des multiples canaux d'écoulement (2).

13. Régulateur de débit selon l'une quelconque des revendications 1 à 12, **caractérisé en ce que** ledit au moins un canal d'écoulement (2) présente sur un côté de sortie (10) du corps d'insertion (1) une ouverture de sortie élargie en forme de cône (11).
